# EUROPEAN PATENT APPLICATION

(11) **EP 2 458 387 A2**
(43) Date of publication of application: **30.05.2012**
(21) Application number: 11190418.1
(22) Date of filing: 23.11.2011
(51) Int. Cl.: G01N 35/00

(54) **specimen processing system**

(30) Priority: 30.11.2010 JP 2010266669; 30.11.2010 JP 2010266670; 30.11.2010 JP 2010266671
(71) Applicant: Kabushiki Kaisha Yaskawa Denki, Kitakyushu-shi, Fukuoka 806-0004 (JP)
(72) Inventor: Chiyajo, Hiroshi, Kitakyushu-Shi, Fukuoka 806-0004 (JP); Yamasaki, Masaya, Kitakyushu-Shi, Fukuoka 806-0004 (JP)
(74) Representative: Gendron, Vincent Christian

(57) **Abstract**

A specimen processing system (1) has a robot (100) equipped with a base (101), torso part (102) and two arms (103L, 103R), and a plurality of devices arranged within the range of movement of the arms (103L, 103R) of the robot (100) for performing the process made up of predetermined steps on the specimen, including a laboratory dish (201), a laboratory dish stand (202), a spatula (203), a spatula stand (204), a test tube (205), test tube stand (206A, 206B), pipette (207A ,207B), a pipette stand (208), a tip (209), a tip stand (210), an incubator (211), a centrifuge (212A, 212B), a stirrer (213A, 213B, 213C), and a heating/cooling device (214).

## Description

### Field of the Invention

The present invention relates to a specimen processing system which executes a process made up of predetermined steps on a specimen.

### Description of the Related Art

When performing analysis or testing on specimens such as blood, spinal fluid, urine and some tissues, a process made up of predetermined steps is performed, including reagent injection, stirring, and separation by centrifugal force or magnetism, supernatant suctioning, heating, cooling, and so forth. Such a series of processes on a specimen are generally performed manually by an operator using devices. Specifically, processes such as reagent injection, stirring, separation and so forth are performed while an operator moves the laboratory dish or test tube that contains the specimen in a predetermined order to a laboratory dish stand or test tube stand, stirrer, centrifuge or heating/cooling device.

As such a specimen processing apparatus of prior art that automatically executes processes on a specimen, that described in JP B 4441599 is known. This specimen processing apparatus of prior art executes on a specimen a process made up of a binding step, a washing step and an extraction step, with the aim of isolating and refining a protein.

However, in the specimen processing apparatus of prior art, a plurality of devices, such as a dispensing robot, stirrer and so forth, are integrated inside a cabinet, and these devices must be dedicated machines that have been modified for dedicated use by the apparatus for performing an automated process. For this reason, there was the problem that it was not possible to make use of the general-purpose devices that were used by an operator.

The present invention came about in consideration of such a problem, and its objective is to provide a specimen processing system which can realize automation of the process steps on the specimen while making use of general-purpose devices.

### SUMMARY OF THE INVENTION

To solve this problem, the present invention is a specimen processing system, comprising: a robot (100) having a base (101) and arms (103L, 103R) having a plurality of joints, a controller which operates the robot to execute a process of predetermined steps on the specimen, and a plurality of devices arranged within a range of movement of the arms (103L, 103R) for performing the process on the specimen.

Also, the plurality of devices are preferably arranged along a wall surface of an enclosure wall provided surrounding the robot.

Also, the arms are preferably provided such that they can swing on the base.

Also, it is preferred that the robot is having two arms configured separately and a torso part that supports the two arms, wherein the torso part is provided such that it can swing on the base, and it supports the two arms on one side and the other side.

Also, it is preferred that the plurality of devices include a test tube, a test tube stand, a pipette, and a pipette stand for performing the process on the specimen, and the test tube stand, pipette stand and a work area for the arms to perform the predetermined work on the specimens are arranged so as to form a substantially straight line on one side of the base.

Also, it is preferred that the robot is having two arms configured separately and a torso part that supports the two arms, wherein the torso part supports the two arms on one side and the other side.

Also, it is preferred that the arms have hands on ends thereof having two grasping members that can move in directions approaching and moving away from each other.

Also, it is preferred that the two grasping members are configured such that they can grasp the test tube from a side of an opening along a longitudinal direction and also can grasp the test tube from a direction orthogonal to the longitudinal direction.

Also, it is preferred that the two grasping members each have inside a first concavity having a substantially arc-shaped cross-section.

Also, it is preferred that the test tube has a cover that can open and close the opening, and the grasping members have a hook on an end that can open and close the cover.

Also, it is preferred that the plurality of devices include a laboratory dish, spatulas and pipettes, and the two grasping members are configured such that they can grasp a plurality of holders for holding the laboratory dish, spatula and pipette.

Also, it is preferred that the two grasping members each have inside a second concavity having a substantially rectangular cross-section.

Also, it is preferred that the plurality of devices include a pipette having a main body and an operating part for performing suctioning and injection operations provided on the end on one side along the longitudinal direction of the main body, and the robot performs a process that uses the pipette by grasping the main body with the hand of one arm and operating the operating part with the hand of the other arm.

Also, it is preferred that the plurality of devices include a laboratory dish and a spatula, and the robot performs a process of mixing the specimen by rotating the laboratory dish via a holder with the hand of one arm and operating the spatula via a holder with the hand of the other arm.

Also, it is preferred that at least some of the plurality of devices are arranged on a table, and a disposal box is provided below the table.

### Advantages of the Invention

According to the present invention, automation of the process steps on a specimen can be realized while making use of general-purpose devices.

### BRIEF DESCRIPTION OF THE DRAWINGS

FIG. 1 is a perspective view illustrating the overall configuration of a specimen processing system of an embodiment of the present invention.
FIG. 2 is a top view of the constituent elements of a specimen processing system.
FIG. 3A is a front view of a robot.
FIG. 3B is a top view of a robot.
FIG. 4A is a side view illustrating the end side of an arm together with a test tube.
FIG. 4B is a top view illustrating the end side of a grasping member of a hand together with a test tube.
FIG. 5A is a partial enlarged top view illustrating a grasping member in the state of grasping a test tube from a direction orthogonal to the longitudinal direction.
FIG. 5B is a partial enlarged side view illustrating a grasping member in the state of grasping a test tube from a direction orthogonal to the longitudinal direction.
FIG. 6A is a top view illustrating a test tube in the state with the cover closed.
FIG. 6B is a top view illustrating a test tube in the state with the cover open.
FIG. 7 is a schematic view illustrating a first holder attached to a spatula.
FIG. 8 is a schematic view illustrating a second holder attached to a pipette.
FIG. 9 is a top view illustrating a third holder together with a laboratory dish.
FIG. 10 is a side view schematically illustrating a fourth holder together with an adsorption pad.
FIG. 11 is a perspective view illustrating the state where a robot is moving a laboratory dish using a third holder.
FIG. 12 is a perspective view illustrating the state where a robot has opened the cover of a laboratory dish using an adsorption pad.
FIG. 13 is a perspective view illustrating the state where a robot is performing a process using a pipette.
FIG. 14 is a perspective view illustrating the state where a robot is performing the process of mixing a specimen using a spatula.
FIG. 15 is a top view of the constituent elements of a specimen processing system of an exemplary modification in which the devices are arranged linearly.
FIG. 16 is a top view of the constituent elements of a specimen processing system of an exemplary modification in which the devices are arranged separated on the left and right.
FIG. 17 is a top view of the constituent elements of a specimen processing system of an exemplary modification in which the devices are arranged radially on a circumference.
FIG. 18 is a side view illustrating, together with its surroundings, a holder for holding a laboratory dish such that it can rotate, in an exemplary modification in which laboratory dish rotation is performed by one hand and spatula operation is performed by the other hand.

### DETAILED DESCRIPTION OF THE EMBODIMENTS

The following describes embodiments of the present invention with reference to accompanying drawings. These embodiments are examples of the case where the specimen processing system of the present invention is applied to pre-treatment of specimens for protein analysis as an example.

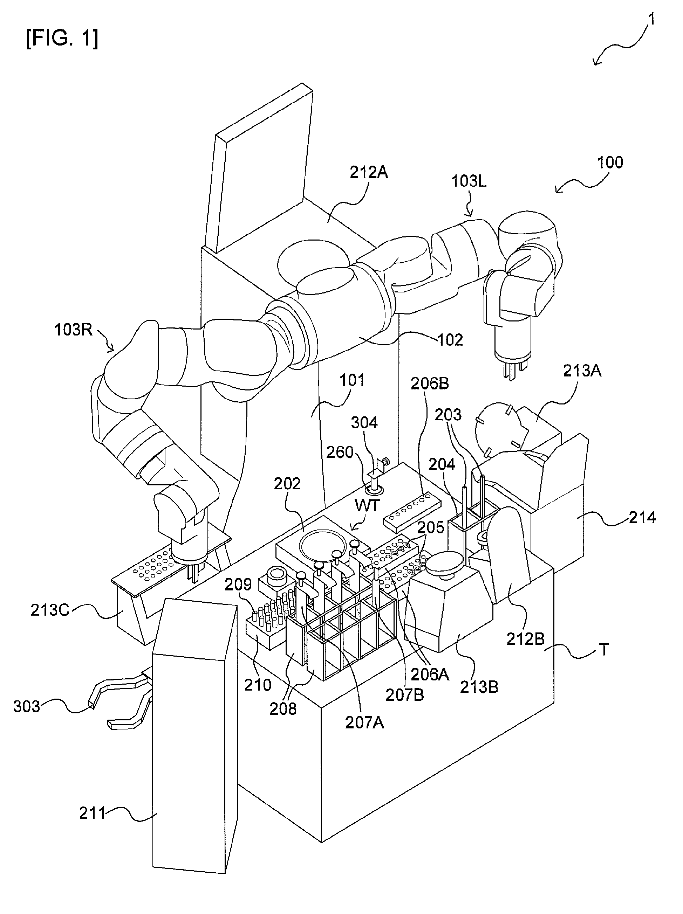

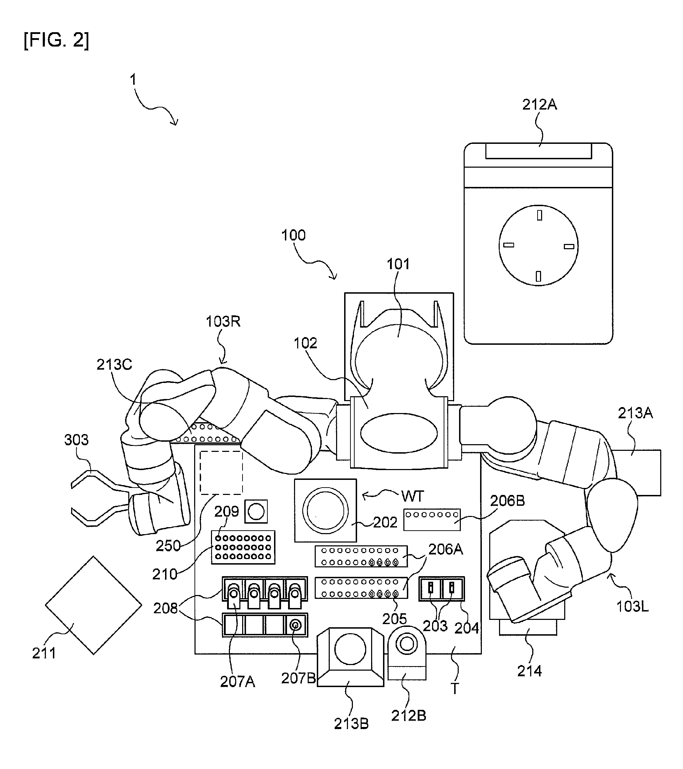

First, the overall configuration of the specimen processing system of this embodiment will be described using FIG. 1 and FIG. 2. FIG. 1 is a perspective view illustrating the overall configuration of the specimen processing system of this embodiment. FIG. 2 is a top view of the constituent elements of the specimen processing system of this embodiment.

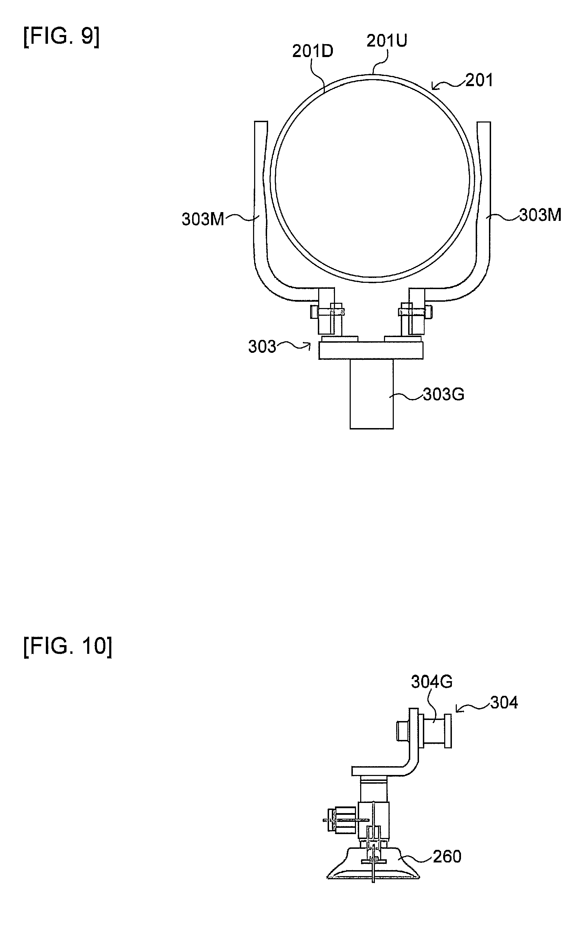

In FIG. 1 and FIG. 2, a specimen processing system 1 is, for example, a system that executes a process made up of predetermined steps (details of which are described later), including reagent injection, stirring, and separation by centrifugal force or magnetism, supernatant suctioning, heating, cooling, and so forth, on a specimen for protein analysis such as blood, spinal fluid, urine and some tissues, which is provided in a clean room of which the air cleanliness level is assured. This specimen processing system 1 has a robot 100 equipped with a base 101, a torso part 102 and two arms 103L and 103R, and a plurality of devices arranged within the range of movement of the arms 103L and 103R of the robot 100 for performing the aforementioned process on the specimen, including laboratory dishes 201 (refer to FIG. 9), a laboratory dish stand 202, spatulas 203, a spatula stand 204, test tubes 205, test tube stands 206A and 206B, pipettes 207A and 207B, a pipette stand 208, tips 209, a tip stand 210, an incubator 211, centrifuges 212A and 212B, stirrers 213A, 213B and 213C, and a heating/cooling device 214. These devices are normal products, commonly used by human. Note that details of the robot 100 will be described later.

The laboratory dish 201 is a flat dish with a cover which holds the specimen. The laboratory dish stand 202 is a stand for loading the laboratory dish 201, arranged in a work area WT on a table T provided near the robot 100. The work area WT is an area for the arms 103L and 103R of the robot 100 to perform the predetermined work (details of which will be described later) on the specimen.

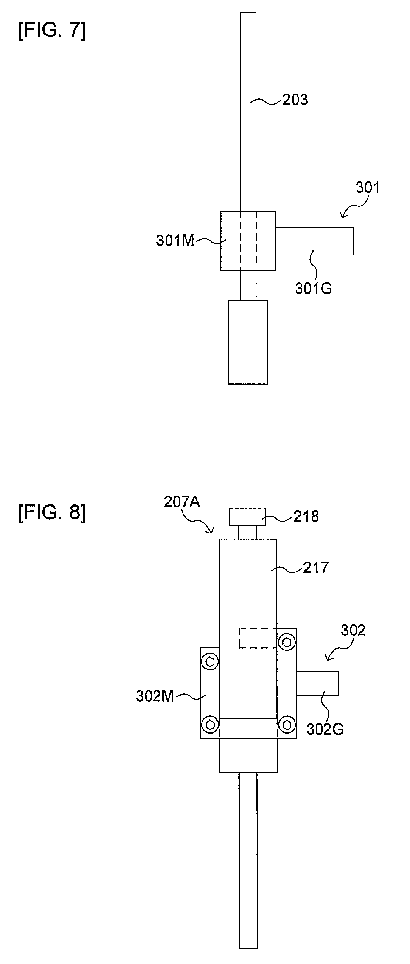

The spatula 203 is an implement for mixing the specimen. The spatulas 203 are provided in the spatula stand 204. Note that, although omitted from FIG. 1 and FIG. 2, a first holder 301 (refer to FIG. 7) for holding the spatula 203 is attached to each spatula 203 provided in the spatula stand 204. The details of the first holder 301 will be described later.

The test tube 205 is an implement for performing the process on the specimen. In this example, the test tubes 205 are microtubes that can be used in the centrifuges 212A and 212B. Note that the test tubes are not limited to microtubes, and may be other types of test tube. The test tubes 205 are provided in the test tube stands 206A and 206B. Of these test tube stands 206A and 206B, the test tube stand 206B is equipped with a magnetic plate on which a permanent magnet is arranged along the longitudinal direction, and also has the function of separating or fractionating the components that constitute the contents held in the test tube 205 (specimen) by magnetism.

The pipettes 207A and 207B are devices for suctioning and injecting reagents and supernatant. In this example, the pipette 207A is a micropipette that can substantially accurately measure out the volume of a small quantity (for example, from 1 microliter to 1000 microliters) of liquid and inject it. The pipette 207B is a pipette that can vacuum-suction liquid. Note that the pipette is not limited to a micropipette or a pipette capable of vacuum suction, but may also be a transfer pipette, measuring pipette, Komagome pipette, Pasteur pipette and so forth. The pipettes 207A and 207B are provided in the pipette stand 208. Note that, although omitted from FIG. 1 and FIG. 2, a second holder 302 (refer to FIG. 8) for holding the pipettes 207A and 207B is attached to each pipette 207A and 207B provided in the pipette stand 208. The details of the second holder 302 will be described later.

The tips 209 are tips (cartridges) for micropipettes, mounted on the end on one side in the longitudinal direction (bottom side in FIG. 8) of the pipette 207A - that is to say, mounted on the tip of the pipette 207A. The tips 209 are provided in the tip stand 210.

The incubator 211 is a machine for culturing specimens. The laboratory dish 201 in which the specimen is held is accommodated in the incubator 211.

The centrifuges 212A and 212B are machines for separating or fractionating the components that constitute the contents (specimen) of the test tube 205 that has been set therein by centrifugal force.

The stirrers 213A, 213B and 213C are devices for stirring the contents (specimen) of the test tube 205 set therein. In this example, the stirrer 213A is a so-called rotating mixer, which stirs the specimen by rotating (revolving) the set test tube 205 around the rotation axis. The stirrer 213B is a so-called vortex mixer, which stirs the specimen by turning the bottom of the set test tube 205 at high speed. The stirrer 213C is a mixer which stirs the specimen by turning (spinning) the set test tube 205 by eccentric oscillation.

The heating/cooling device 214 is a machine for heating/cooling the specimen.

Note that the plurality of devices are not limited to the above-mentioned devices, and one or more of the above devices may be omitted, and other devices may be included. Below, where appropriate, to indicate a device included among the plurality of devices without distinction, it is simply called a "device."

Also, at least some of the plurality of devices - in this example, the laboratory dish stand 202, spatulas 203, spatula stand 204, test tubes 205, test tube stands 206A and 206B, pipettes 207A and 207B, pipette stand 208, tips 209, tip stand 210, centrifuge 212B and stirrer 213B and so forth - are arranged on the table T. Devices other than those - in this example, the incubator 211, centrifuge 212A, stirrers 213A and 213C and heating/cooling device 214 and so forth - are arranged in an appropriate location within the range of movement of the arms 103L and 103R (for example, at positions peripheral to the table T). Furthermore, a third holder 303 for holding the laboratory dish 201 and a fourth holder 304 for holding the cover 201U of the laboratory dish 201 (refer to FIG. 9), which is attached to an adsorption pad 260 (details of which will be described later), are arranged at appropriate positions within the range of movement of the arm 103L and 103R (for example, on the table T). Note that the details of the third and fourth holders 303 and 304 will be described later. Additionally, as shown in FIG. 2, a disposal box 250 for disposing of consumable products such as used tips 209 and spatulas 203 is provided below the table T.

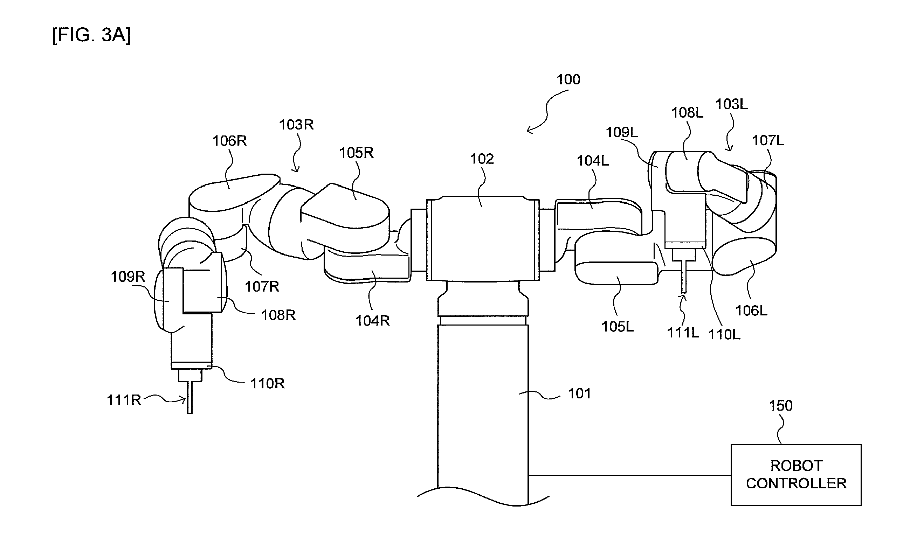

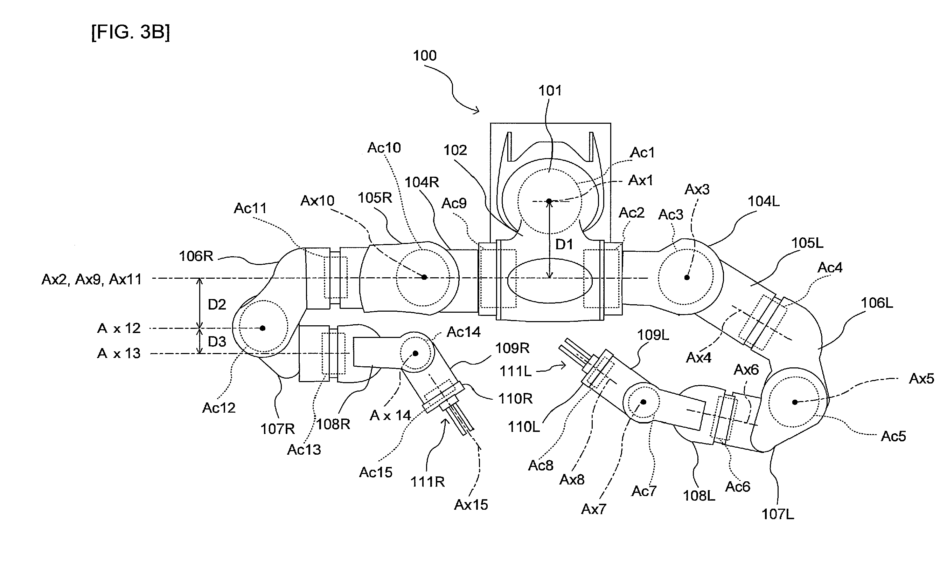

Next, the overall configuration of the robot 100 will be described using FIG. 3. FIG. 3A is a front view of the robot 100, and FIG. 3B is a top view of the robot 100.

In FIG. 3A and FIG. 3B, the robot 100 is a vertical articulated robot equipped with a base 101, a torso part 102, and two arms 103L and 103R. It is connected to a robot controller 150, which is equipped with computing devices, memory devices, input devices and the like for controlling the operation of the robot 100, such that mutual communication is possible. The base 101 is affixed to the installation surface (floor of a clean room, etc.) by anchor bolts or the like not shown in the drawings. The torso part 102 has a first joint on which an actuator Ac1 that drives rotation around the rotation axis Ax1 is provided. The torso part 102 is installed on the base 101 such that it can swing via the first joint, and it swings along a direction that is substantially level with the above-mentioned installation surface by driving by the actuator Ac1 provided on the first joint. Also, the torso part 102 supports the separately configured arms 103L and 103R on one side (right side in FIG. 3) and the other (left side in FIG. 3), respectively.

The arm 103L is a manipulator provided on one side of the torso part 102, which has a shoulder part 104L, an upper arm A part 105L, an upper arm B part 106L, a lower arm part 107L, a wrist A part 108L, a wrist B part 109L, a flange 110L and a hand 111L, and second through eighth joints respectively provided with actuators Ac2 through Ac8 which respectively drive rotation of each part.

The shoulder part 104L is connected via the second joint to the torso 102 such that it can rotate, and it rotates around a rotation axis Ax2 that is substantially level with the above-mentioned installation surface by driving by the actuator Ac2 provided on the second joint. The upper arm A part 105L is connected via the third joint to the shoulder part 104L such that it can swing, and it swings around a rotation axis Ax3 which is orthogonal to the rotation axis Ax2 by driving by the actuator Ac3 provided on the third joint. The upper arm B part 106L is connected via the fourth joint to the end of the upper arm A part 105L such that it can rotate, and it rotates around a rotation axis Ax4 which is orthogonal to the rotation axis Ax3 by driving by the actuator Ac4 provided on the fourth joint. The lower arm part 107L is connected via the fifth joint to the upper arm B part 106L such that it can swing, and it swings around a rotation axis Ax5 which is orthogonal to the rotation axis Ax4 by driving by the actuator Ac5 provided on the fifth joint. The wrist A part 108L is connected via the sixth joint to the end of the lower arm part 107L such that it can rotate, and it rotates around a rotation axis Ax6 which is orthogonal to the rotation axis Ax5 by driving by the actuator Ac6 provided on the sixth joint. The wrist B part 109L is connected via the seventh joint to the wrist A part 108L such that it can swing, and it swings around a rotation axis Ax7 which is orthogonal to the rotation axis Ax6 by driving by the actuator Ac7 provided on the seventh joint. The flange 110L is connected via the eighth joint to the end of the wrist B part 109L such that it can rotate, and it rotates around a rotation axis Ax8 which is orthogonal to the rotation axis Ax7 by driving by the actuator Ac8 provided on the eighth joint. The hand 111L is mounted on the end of the flange 110L, and rotates in a following manner by rotation of the flange 110L.

The arm 103R is a manipulator provided on the other side of the torso part 102, which has the same structure as the arm 103L described above. The arm 103R has a shoulder part 104R, an upper arm A part 105R, an upper arm B part 106R, a lower arm part 107R, a wrist A part 108R, a wrist B part 109R, a flange 110R and a hand 111R, and ninth through fifteenth joints respectively provided with actuators Ac9 through Ac15 which respectively drive rotation of each part.

The shoulder part 104R is connected via the ninth joint to the torso part 102 such that it can rotate, and it rotates around a rotation axis Ax9 that is substantially level with the above-mentioned installation surface by driving by the actuator Ac9 provided on the ninth joint. The upper arm A part 105R is connected via the 10th joint to the shoulder part 104R such that it can swing, and it swings around a rotation axis Ax10 which is orthogonal to the rotation axis Ax9 by driving by the actuator Ac10 provided on the 10th joint. The upper arm B part 106R is connected via the 11th joint to the end of the upper arm A part 105R such that it can rotate, and it rotates around a rotation axis Ax11 which is orthogonal to the rotation axis Ax10 by driving by the actuator Ac11 provided on the 11th joint. The lower arm part 107R is connected via the 12th joint to the upper arm B part 106R such that it can swing, and it swings around a rotation axis Ax12 which is orthogonal to the rotation axis Ax11 by driving by the actuator Ac12 provided on the 12th joint. The wrist A part 108R is connected via the 13th joint to the end of the lower arm part 107R such that it can rotate, and it rotates around a rotation axis Ax13 which is orthogonal to the rotation axis Ax12 by driving by the actuator Ac13 provided on the 13th joint. The wrist B part 109R is connected via the fourteenth joint to the wrist A part 108R such that it can swing, and it swings around a rotation axis Ax14 which is orthogonal to the rotation axis Ax13 by driving by the actuator Ac14 provided on the fourteenth joint. The flange 110R is connected via the fifteenth joint to the end of the wrist B part 109R such that it can rotate, and it rotates around a rotation axis Ax15 which is orthogonal to the rotation axis Ax14 by driving by the actuator Ac15 provided on the fifteenth joint. The hand 111R is mounted on the end of the flange 110R, and rotates in a following manner by rotation of the flange 110R.

Note that, as shown in FIG. 3B, the torso part 102 is formed so as to jut out forward in a direction level with the base 101 from the first joint to the second and ninth joints, such that the rotation axis Ax1 of the first joint and the rotation axes Ax2 and Ax9 of the second and ninth joints, respectively, are offset by length D1 in the direction substantially level with the above-mentioned installation surface. As a result, the space below the shoulder parts 104R and 104L can be used as work space, and the range of reach of the arms 103L and 103R can be expanded by rotating the rotation axis Axl.

Also, the shape of the upper arm B part 106R is set such that the rotation axis Ax11 of the 11th joint and the rotation axis Ax12 of the 12th joint are offset by length D2 as seen from above. Additionally, the shape of the lower arm part 107R is set such that the rotation axis Ax12 of the 12th joint and the rotation axis Ax13 of the 13th joint are offset by length D3 as seen from above, and, as shown in FIG. 3B, when the rotation axis Ax11 and the rotation axis Ax13 are substantially level with each other, the offset length between the rotation axis Ax11 and the rotation axis Ax13 is (D2 + D3). As a result, when the 12th joint, which is equivalent to a human "elbow," is bent, a large clearance can be assured between the upper arm A part 105R and upper arm B part 106R, which are equivalent to a human "upper arm," and the lower arm A part 107 R, which is equivalent to a human "lower arm," and the degree of freedom of motion of the arm 103R can be expanded even if the hand 111R has been brought closer to the torso part 102.

Also, although not shown in FIG. 3B, the arm 103L is the same, in that the shape of the upper arm B part 106L is set such that the rotation axis Ax4 of the fourth joint and the rotation axis Ax5 of the fifth joint are offset by length D2 as seen from above. Additionally, the shape of the lower arm part 107L is set such that the rotation axis Ax5 of the fifth joint and the rotation axis Ax6 of the sixth joint are offset by length D3 as seen from above, and the offset length between the rotation axis Ax4 and the rotation axis Ax6 is (D2 + D3).

Also, the actuators Ac1 through Ac15 provided on the first through fifteenth joints are each constructed from, for example, a servo motor having a reduction gear, and the rotation position of each actuator Ac1 through Ac15 is input to the robot controller 150 as a signal from an encoder (not shown) built into each actuator Ac1 through Ac15.

Furthermore, the torso part 102 has one joint - that is to say, one degree of freedom - and the arms 103L and 103R each have seven joints or seven degrees of freedom (redundant degrees of freedom), so that the robot 100 overall has fifteen degrees of freedom. By using a vertical articulated robot having arms 103L and 103R with redundant degrees of freedom as the robot 100, it is possible to easily avoid interference between the objects arranged surrounding the robot 100 and the robot 100 itself. Note that the number of joints of the arms 103L and 103R - that is to say, the degree of freedom - is not limited to "seven" as in this embodiment, and may be "two" or above.

Note that, as described above, the torso part 102 being installed on the base 101 such that it can swing and the shoulder parts 104L and 104R of the arms 103L and 103R being supported by the torso part 102 are equivalent to the arms 103L and 103R being installed on the base 101 such that they can swing (via the torso part 102).

Also, below, where appropriate, when indicating the arms 103L and 103R as a unit, they are called simply "arm 103," and when indicating the hands 111L and 111R as a unit, they are called simply "hand 111."

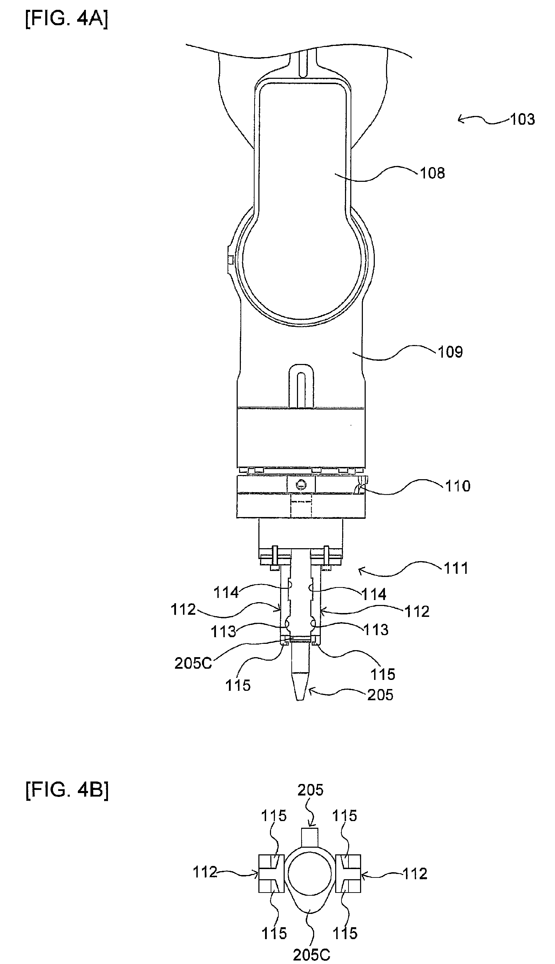

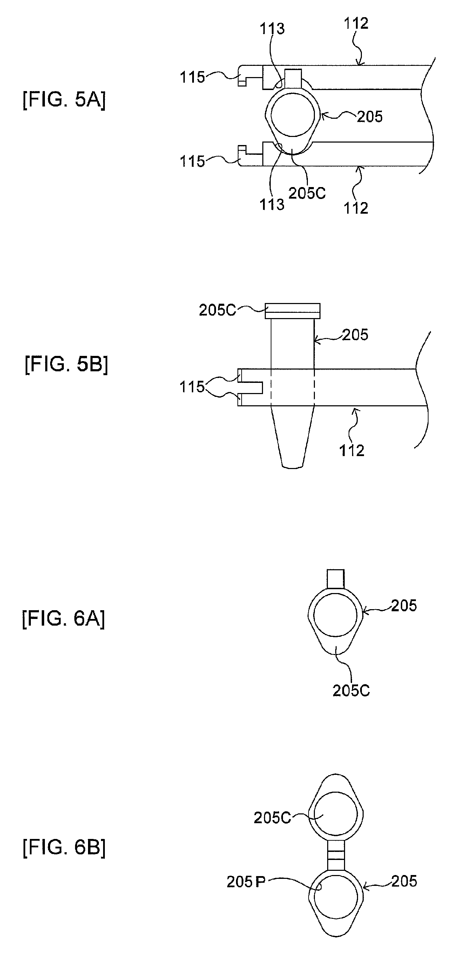

Next, the detailed configuration of the hands 111 will be described using FIG. 4, FIG. 5 and FIG. 6. FIG. 4A is a side view illustrating the end side of the arm 103 together with a test tube 205, and FIG. 4B is a top view illustrating the end side of the grasping member of the hand 111 together with a test tube 205. FIG. 5A and FIG. 5B are partial enlarged views illustrating a grasping member in the state of grasping a test tube 205 from a direction orthogonal to the longitudinal direction. FIG. 6A is a top view illustrating the test tube 205 in the state with the cover closed, and FIG. 6B is a top view illustrating the test tube 205 in the state with the cover open.

In FIGS. 4 through 6, the hands 111 respectively provided on the ends of the arms 103 each have on their ends two grasping members 112 that can move in directions approaching and moving away from each other. These two grasping members 112, as shown in FIG. 4A and FIG. 4B, are configured such that they can grasp the test tube 205 from the side near the opening 205P (described later) in the longitudinal direction - that is, from the long-direction opening side. That is to say, the robot 100 grasps the test tube 205 from the long-direction opening side using the two grasping members 112 provided on the hand 111 of the arm 103. Also, the two grasping members 112 each have a first concavity 113 having a substantially arc-shaped cross-section, and, as shown in FIG. 5A and FIG. 5B, are configured so as to be able to grasp the test tube 205 from the direction orthogonal to the longitudinal direction using these first concavities 113. That is to say, the robot 100 grasps the test tube 205 from the direction orthogonal to the longitudinal direction using the first concavities 113 of the two grasping members 112 provided on the hand 111 of the arm 103. Additionally, the two grasping members 112 each have a second concavity 114 having a substantially rectangular cross-section on the inside on the sides nearer to the flanges 110L and 110R (top side in FIG. 4) than the respective first concavities 113, and are configured such that they can grasp the first through fourth holders 301 through 304 using these second concavities 114. That is, the robot 100 grasps the first through fourth holders 301 through 304 (more specifically, grasped parts 301G, 302G, 303G and 304G described later provided on the first through fourth holders 301 through 304) using the second concavities 113 of the two grasping members 112 provided on the hands 111.

Here, the test tube 205 has an integrated cover 205C that can open and close the opening 205P so that the specimen held inside does not overflow from the opening 205P when stirring or centrifugal separation is performed using the stirrers 213A through 213C or the centrifuges 212A and 212B. When a cover 205C is provided on the test tube 205 in this manner, the cover 205C must be opened as shown in FIG. 6B when injecting the specimen or reagents into the test tube 205, and the cover 205C must be closed as shown in FIG. 6A when the test tube 205 is provided in the stirrers 213A through 213C or centrifuges 212A and 212B. Thus, in this embodiment, each grasping member 112 has two hooks 115 on the end that can open and close the cover 205C. That is to say, the robot 100 opens and closes the cover 205C of the test tube 205 using the hooks 115 provided on the hands 111.

Next, the details of the first through fourth holders 301 through 304 will be described using FIG. 7, FIG. 8, FIG. 9 and FIG. 10. FIG. 7 is a schematic view illustrating the first holder 301 attached to the spatula 203. FIG. 8 is a schematic view illustrating the second holder 302 attached to the pipette 207A. FIG. 9 is a top view illustrating the third holder 303 together with the laboratory dish 201. FIG. 10 is a side view illustrating the fourth holder 304 together with the adsorption pad 260.

As shown in FIG. 7, the first holder 301 is attached to the spatula 203. The first holder 301 is formed in a cylindrical shape, and has a holding part 301M which can hold the spatula 203, and a grasped part 301G which fits into the second concavities 114 of the two grasping members 112 and can be grasped by the two grasping members 112. That is to say, the robot 100 grasps the grasped part 301G using the second concavities 114 of the two grasping members 112 provided on the hand 111. In other words, the spatula 203 is grasped by the hand 111 via the first holder 301. Then, the process of mixing the specimen is performed by operating the spatula 203 via the first holder 301.

Also, as shown in FIG. 8, the pipette 207A has a main body 217, and a push-button 218 (operating part) for performing suctioning and injection operations provided on the end on one side in the longitudinal direction (top side in FIG. 8) of the main body 217. The second holder 302 is attached to the main body 217. The second holder 302 is formed in a substantially squared U shape, and has a holding part 302M which can hold the pipette 207A (or pipette 207B), and a grasped part 302G which fits into the second concavities 114 of the two grasping members 112 and can be grasped by the two grasping members 112. That is to say, the robot 100 grasps the grasped part 302G using the second concavities 114 of the two grasping members 112 provided on one of the hands 111. In other words, the main body 217 is grasped by one of the hands 111 I via the second holder 302. Then, a process that uses the pipette 207A, such as suctioning or injection of reagent or supernatant, is performed by operating the push-button 218 by the hand 111 of the other arm 103. Note that the second holder 302 is attached to the pipette 207A as shown in FIG. 8, but similarly, the second holder 302 may also be attached to the pipette 207B in the same manner as described above.

Also, as shown in FIG. 9, the laboratory dish 201 is constructed from a base dish 201D that holds the specimen, and a cover 201U provided so as to cover the base dish 201D. The third holder 303 has two laboratory dish grasping members 303M which can move in directions approaching and moving away from each other by controlling air pressure using a procedure similar to an air chuck, for example, and a grasped part 303G which fits into the second concavities 114 of the two grasping members 112 and can be grasped by the two grasping members 112. That is to say, the robot 100 grasps the grasped part 303G using the second concavities 114 of the two grasping members 112 provided on the hand 111, and grasps the laboratory dish 201 by operating the two laboratory dish grasping members 303M by the hand 111. In other words, the laboratory dish 201 is grasped by the hand 111 via the third holder 303. Then, it removes the laboratory dish 201 from the incubator 211, and moves the removed laboratory dish 201 to the laboratory dish stand 202 and loads it.

Also, as shown in FIG. 10, the adsorption pad 260 is a device for adsorbing and lifting the cover 201U of the laboratory dish 201. The fourth holder 304 is attached to the adsorption pad 260. The fourth holder 304 has a grasped part 304G which fits into the second concavities 114 of the two grasping members 112 and can be grasped by the two grasping members 112. That is to say, the robot 100 grasps the grasped part 304G using the second concavities 114 of the two grasping members 112 provided on the hand 111. In other words, the adsorption pad 260 is grasped by the hand 111 via the fourth holder 304. Then, it lifts the cover 201U of the laboratory dish 201 by operating the adsorption pad 260 via the fourth holder 304.

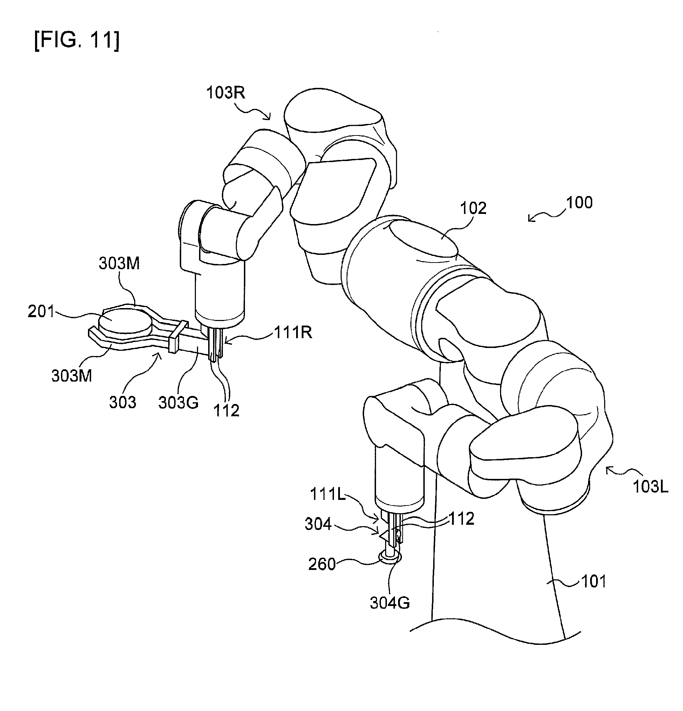

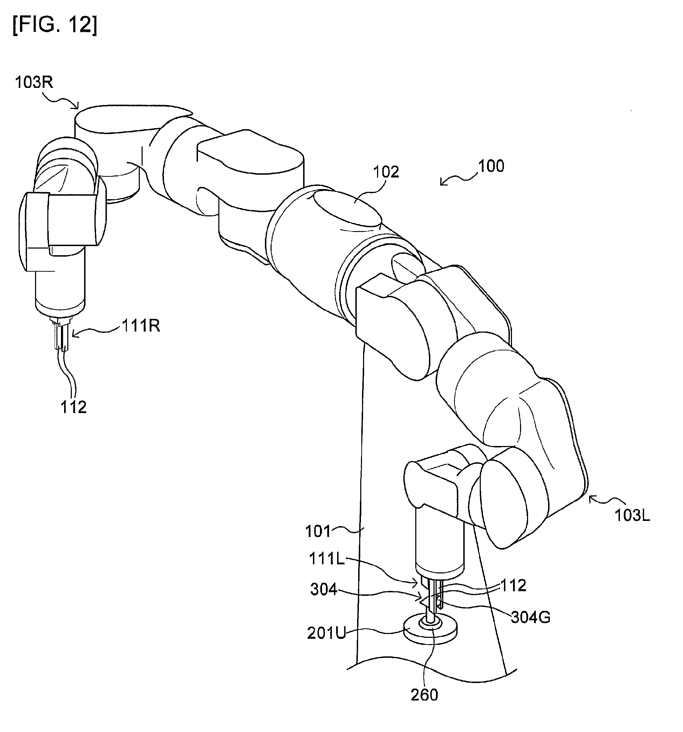

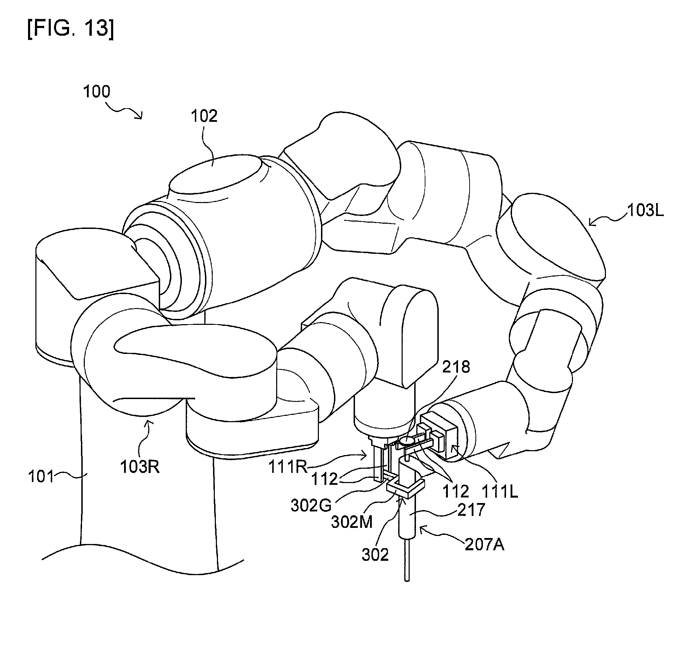

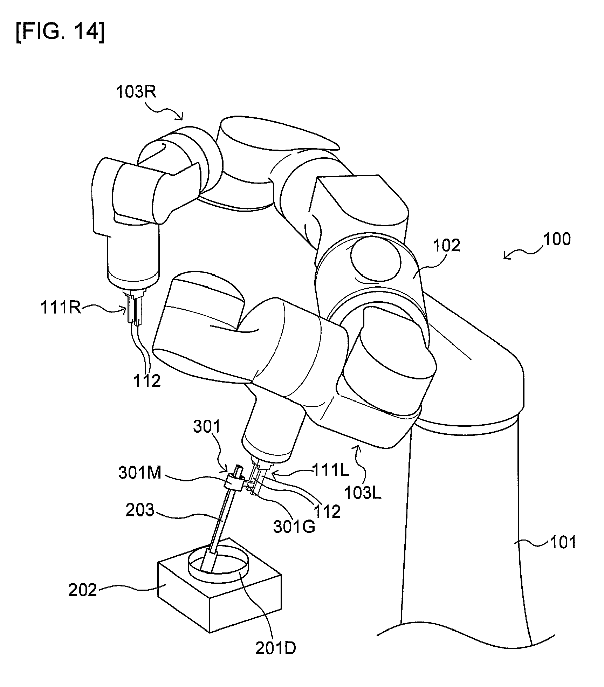

Next, an example of the operation of the robot 100 will be described using FIG. 11, FIG. 12, FIG. 13 and FIG. 14. FIG. 11 is a perspective view illustrating the state where the robot 100 is moving the laboratory dish 201 using the third holder 303. FIG. 12 is a perspective view illustrating the state where the robot 100 has opened the cover 201U of the laboratory dish 201 using the adsorption pad 260. FIG. 13 is a perspective view illustrating the state where the robot 100 is performing a process using the pipette 207A. FIG. 14 is a perspective view illustrating the state where the robot 100 is performing the process of mixing a specimen using the spatula 203. Note that in FIGS. 11 through 14, the two grasping members 112 provided on each hand 111L and 111R are illustrated while omitting the first concavities 113, second concavities 114 and hooks 115.

In FIGS. 11 through 14, the movement of the robot 100 is controlled by the robot controller 150. The robot 100 stands by without starting operation until an operation start command is input from the robot controller 150. Then, when an operation start command is input from the robot controller 150, it starts operation. Note that in the description of operations below, either of the arms 103R or 103L may be used, or the opposite arm may be used, and work performed using one of the arms may also be performed cooperatively by the two arms.

As shown in FIG. 11, the robot 100 swings the arm 103R, and grasps the grasped part 303G of the third holder 303 using the second concavities 114 of the two grasping members 112 provided on the hand 111R. Subsequently, by operating the two laboratory dish grasping members 303M provided on the third holder 303 by the hand 111R, it grasps the laboratory dish 201 held in the incubator 211, and removes the laboratory dish 201 from the incubator 211, and loads the removed laboratory dish 201 on the laboratory dish stand 202.

Also, at this time, as shown in FIG. 12, the robot 100 swings the arm 103L, and grasps the grasped part 304G of the fourth holder 304 attached to the adsorption pad 260 using the second concavities 114 of the two grasping members 112 provided on the hand 111L. Then, it adsorbs and lifts the cover 201U of the laboratory dish 201 loaded on the laboratory dish stand 202 by operating the adsorption pad 260 via the fourth holder 304 by the hand 111L. Note that the case where the cover 201U of the laboratory dish 201 is lifted using the adsorption pad 260 was described, but the cover 201U may also be lifted using the third holder 303 without using the adsorption pad 260.

Subsequently, the robot 100 swings the arm 103R, and grasps the grasped part 302G of the second holder 302 attached to the pipette 207B using the second concavities 114 of the two grasping members 112 provided on the hand 111R. Then, it vacuum-suctions the supernatant in the base dish 201D of the laboratory dish 201 loaded on the laboratory dish stand 202 by operating the pipette 207B via the second holder 302 by the hand 111R.

Subsequently, as shown in FIG. 13, the robot 100 swings the arm 103R, and grasps the grasped part 302G of the second holder 302 attached to the main body 217 of the pipette 207A using the second concavities 114 of the two grasping members 112 provided on the hand 111R. Then, it attaches a tip 209 to the end of the pipette 207A grasped by the hand 111R. Subsequently, it swings the arm 103L, and by operating the push-button 218 by the hand 111L, it suctions reagent via the tip 209, and injects this suctioned reagent into the base dish 201D of the laboratory dish 201 loaded on the laboratory dish stand 202. After injection, the robot 100 swings the arm 103R, and moves the hand 111R to below the table T, and by predetermined operations it removes the used tip 209 from the end of the pipette 207A and disposes of it in the disposal box 250. Below, this is the same in any case where a tip 209 is used.

Then, as shown in FIG. 14, the robot 100 swings the arm 103L, and grasps the grasped part 201G of the first holder 301 attached to the spatula 203 using the second concavities 114 of the two grasping members 112 provided on the hand 111L. Subsequently, it mixes the specimen in the base dish 201D of the laboratory dish 201 loaded on the laboratory dish stand 202 by operating the spatula 203 via the first holder 301 by the hand 111L. After mixing, the robot 100 swings the arm 103L and moves the hand 111L to below the table T, and disposes of the used spatula 203 in the disposal box 250.

Then, the robot 100 swings the arm 103L, and opens the cover 205C of the test tube 205 using the hooks 115 provided on the hand 111L. Subsequently, similar to the case shown in FIG. 13, it grasps the grasped part 302G of the second holder 302 attached to the pipette 207A by the hand 111R of the arm 103R, and attaches a tip 209 to the end of the pipette 207A grasped by the hand 111R. Then, by operating the push-button 218 by the hand 111L of the arm 103L, it suctions the supernatant (specimen) inside the base dish 201D of the laboratory dish 201 loaded on the laboratory dish stand 202 via the tip 209, and injects the suctioned specimen into the test tube 205 of which the cover 205C has been opened.

Subsequently, the robot 100 swings the arm 103L, and closes the cover 205C of the test tube 205 into which the specimen was injected using the hooks 115 provided on the hand 111L. Then, it swings the arm 103L, and grasps the test tube 205 into which the specimen was injected from the long-direction opening side using the two grasping members 112 provided on the hand 111L. Subsequently, it swings the arm 103L, and sets the test tube 205 grasped by the hand 111L in the heating/cooling device 214, which heats or cools the specimen for a certain time.

Then, when the certain time has elapsed, the robot 100 grasps the test tube 205 that was set in the heating/cooling device 214 from the long-direction opening side by the hand 111L of the arm 103L, and removes the test tube 205 from the heating/cooling device 214. Subsequently, it swings the arm 103L, and sets the test tube 205 grasped by the hand 111L in the centrifuge 212A, which centrifugally separates the specimen for a certain time.

Then, when the certain time has elapsed, the robot 100 grasps the test tube 205 that was set in the centrifuge 212A from the long-direction opening side by the hand 111L of the arm 103L, and removes the test tube 205 from the centrifuge 212A. Subsequently, it swings the arm 103L, and sets the test tube 205 grasped by the hand 111L in the test tube stand 206A.

Then, similar to above, the robot 100 opens the cover 205C of the test tube 205 held in the test tube stand 206A using the hooks 115 provided on the hand 111L of the arm 103L. Subsequently, similar to above, it grasps the grasped part 302G of the second holder 302 attached to the pipette 207B by the hand 111R of the arm 103R, and vacuum-suctions the supernatant inside the test tube 205 of which the cover 205C was opened.

Subsequently, similar to the case shown in FIG. 13, the robot 100 grasps the grasped part 302G of the second holder 302 attached to the pipette 207A by the hand 111R of the arm 103R, and attaches a tip 209 to the end of the pipette 207A grasped by the hand 111R. Then, by operating the push-button 218 by the hand 111L of the arm 103L, it suctions reagent via the tip 209, and injects this suctioned reagent into the test tube 205 of which the cover 205C was opened.

Subsequently, similar to above, the robot 100 closes the cover 205C of the test tube 205 into which the reagent was injected using the hooks 115 provided on the hand 111L of the arm 103L. Then, it grasps the test tube 205 into which the reagent was injected from the long-direction opening side using the two grasping members 112 provided on the hand 111L of the arm 103L. Subsequently, it swings the arm 103L, and sets the test tube 205 grasped by the hand 111L in the stirrer 213B, which stirs the specimen for a certain time. Then, it swings the arm 103L, and, similar to above, sets the test tube 205 grasped by the hand 111L in the centrifuge 212A, which centrifugally separates the specimen for a certain time.

Subsequently, when the certain time has elapsed, similar to above, the robot 100 grasps the test tube 205 that was set in the centrifuge 212A from the long-direction opening side by the hand 111L of the arm 103L, and removes the test tube 205 from the centrifuge 212A. Then, it swings the arm 103L, and sets the test tube 205 grasped by the hand 111L in the test tube stand 206A.

Subsequently, similar to above, the robot 100 opens the cover 205C of the test tube 205 held in the test tube stand 206A as well as another cover 205C of another test tube 205C using the hooks 115 provided on the hand 111L of the arm 103L. Then, similar to the case shown in FIG. 13, it grasps the grasped part 302G of the second holder 302 attached to the pipette 207A by the hand 111R of the arm 103R, and attaches a tip 209 to the end of the pipette 207A grasped by the hand 111R. Then, by operating the push-button 218 by the hand 111L of the arm 103L, it suctions the supernatant (specimen) inside the test tube 205 of which the cover 205C was opened via the tip 209, and injects this suctioned specimen into the other test tube 205 of which the cover 205C was opened.

Subsequently, similar to above, the robot 100 closes the cover 205C of the test tube 205 into which the specimen was injected using the hooks 115 provided on the hand 111L of the arm 103L. Then, it grasps the test tube 205 into which the specimen was injected from the long-direction opening side using the two grasping members 112 provided on the hand 111L of the arm 103L. Subsequently, it swings the arm 103L, and stirs the specimen by shaking the test tube 205 grasped by the hand 111L. Then, it swings the arm 103L, and sets the test tube 205 grasped by the hand 111L in the stirrer 213A, which stirs the specimen for a certain time.

Subsequently, when the certain time has elapsed, the robot 100 grasps the test tube 205 that was set in the stirrer 213A from the long-direction opening side by the hand 111L of the arm 103L, and removes the test tube 205 from the stirrer 213A. Note that, at this time, the test tube 205 may also be transferred by grasping the test tube 205 grasped by the hand 111L from the direction orthogonal to the longitudinal direction using the first concavities 113 of the two grasping members 112 provided on the arm 103R. Then, it swings the arm 103L (arm 103R in the case where the test tube 205 was transferred), and sets the test tube 205 grasped by the hand 111L (hand 111R in the case where the test tube 205 was transferred) in the test tube stand 206B, which magnetically separates the specimen.

Subsequently, similar to above, the robot 100 opens the cover 205C of the test tube 205 held in the test tube stand 206B using the hooks 115 provided on the hand 111L of the arm 103L. Then, similar to above, it grasps the grasped part 302G of the second holder 302 attached to the pipette 207B by the hand 111R of the arm 103R, and vacuum-suctions the supernatant inside the test tube 205 of which the cover 205C was opened.

Subsequently, similar to the case shown in FIG. 13, the robot 100 grasps the grasped part 302G of the second holder 302 attached to the pipette 207A by the hand 111R of the arm 103R, and attaches a tip 209 to the end of the pipette 207A grasped by the hand 111R. Then, by operating the push-button 218 by the hand 111L of the arm 103L, it suctions reagent via the tip 209, and injects this suctioned reagent into the test tube 205 of which the cover 205C was opened.

Subsequently, similar to above, the robot 100 closes the cover 205C of the test tube 205 into which the reagent was injected using the hooks 115 provided on the hand 111L of the arm 103L. Then, it grasps the test tube 205 into which the reagent was injected from the long-direction opening side using the two grasping members 112 provided on the hand 111R of the arm 103R. Subsequently, it swings the arm 103R, and sets the test tube 205 grasped by the hand 111R in the stirrer 213C, which stirs the specimen for a certain time.

Subsequently, when the certain time has elapsed, the robot 100 grasps the test tube 205 that was set in the stirrer 213C from the long-direction opening side by the hand 111R of the arm 103R, and removes the test tube 205 from the stirrer 213C. Then, it swings the arm 103R, and sets the test tube 205 grasped by the hand 111R in the test tube stand 206B, which magnetically separates the specimen.

Subsequently, similar to above, the robot 100 opens the cover 205C of the test tube 205 held in the test tube stand 206B using the hooks 115 provided on the hand 111L of the arm 103L. Then, similar to the case shown in FIG. 13, it grasps the grasped part 302G of the second holder 302 attached to the pipette 207A by the hand 111R of the arm 103R, and attaches a tip 209 to the end of the pipette 207A grasped by the hand 111R. Then, by operating the push-button 218 by the hand 111L of the arm 103L, it suctions reagent via the tip 209, and injects this suctioned reagent into the test tube 205 of which the cover 205C was opened.

Subsequently, similar to above, the robot 100 closes the cover 205C of the test tube 205 into which the reagent was injected using the hooks 115 provided on the hand 111L of the arm 103L. Then, it grasps the test tube 205 into which the reagent was injected from the long-direction opening side using the two grasping members 112 provided on the hand 111L of the arm 103L. Subsequently, it swings the arm 103L, and sets the test tube 205 grasped by the hand 111L in the centrifuge 212B, which centrifugally separates the specimen for a certain time.

Then, when the certain time has elapsed, the robot 100 grasps the test tube 205 that was set in the centrifuge 212B from the long-direction opening side by the hand 111L of the arm 103L, and removes the test tube 205 from the centrifuge 212B. Subsequently, it swings the arm 103L, and sets the test tube 205 grasped by the hand 111L in the stirrer 213B, which stirs the specimen for a certain time. Then, it swings the arm 103L, and, similar to above, sets the test tube 205 grasped by the hand 111L in the heating/cooling device 214, which heats or cools the specimen for a certain time.

Subsequently, when the certain time has elapsed, the robot 100 grasps the test tube 205 that was set in the heating/cooling device 214 from the long-direction opening side by the hand 111L of the arm 103L, and removes the test tube 205 from the heating/cooling device 214. With that, the robot 100 finishes the process made up of predetermined steps.

Note that, in the above description, the work performed by the arm 103 on the specimen on the laboratory dish stand 202 arranged in the work area WT (refer to FIG. 1), for example vacuum-suctioning of supernatant by the pipette 207B, injection of reagent by the pipette 207A and stirring of the specimen by the spatula 203, are equivalent to the predetermined work stated in the claims.

As described above, the specimen processing system 1 of this embodiment has a robot 100 and a plurality of devices. Also, all of the plurality of devices are arranged within the range of movement of the arms 103L and 103R of the robot 100, and the robot 100 executes a process made up of predetermined steps on the specimen while using the devices by the arms 103L and 103R.

At this time, in this embodiment, since the robot 100 uses the devices by using the arms 103L and 103R, general-purpose devices that are used when processes are performed manually by operators may be used, without the need to use modified, dedicated devices. That is to say, by the arms 103L and 103R, the robot 100 can move the laboratory dish 201 or test tube 205 that contains the specimen in a predetermined order to the laboratory dish stand 202 or test tube stands 206A and 206B, stirrers 213A through 213C, centrifuges 212A and 212B, heating/cooling device 214 and so forth, and can execute the process made up of predetermined steps. Therefore, automation of the process steps on a specimen can be realized while making use of the general-purpose devices that have been used by operators. Also, since it is possible to make use of general-purpose devices, there is no cost increase due to duplication of devices when the process is automated.

Also, in this embodiment, a system configuration in which the operator is replaced by a robot 100 can be realized. As a result, the devices can be centrally arranged in a smaller space than if an operator were to perform the processing work, because the robot 100 can achieve positions and operations that are impossible for humans due to the articulated structure of the arms 103L and 103R. Therefore, installation space can be reduced. Additionally, among the process steps performed on a specimen, the process results of suctioning and injection by the pipette 207A, mixing of the specimen by the spatula 203, stirring of the specimen by shaking the test tube 205 and so forth vary depending on the degree of training of the operator, and there is the problem that if the operators are different, the process results will be non-uniform. But if such processes are performed by the robot 100, processes can be performed without such non-uniformity and with good precision.

Also, in this embodiment in particular, the robot 100 is equipped with two arms 103L and 103R that are configured as separate bodies, and a torso part 102 which supports the two arms. Also, the torso part 102 supports the two arms 103L and 103R on one side and the other. Since the robot 100 is equipped with two arms 103L and 103R configured as separate bodies, individual work can be performed in parallel by the arms 103, and specimen processing can be performed rapidly. Also, complex work can be executed using both arms 103. Additionally, since the two arms 103L and 103R are supported on one side and the other of the torso part 102, each arm 103 can perform independent work without interfering with the other.

Also, in this embodiment in particular, the arms 103L and 103R have hands 111L and 111R, respectively, on the ends, which are equipped with two grasping members 112 that can move in directions approaching and moving away from each other. As a result, they can grasp the test tube 205 and move the test tube 205 and so forth by the hands 111. Also, they can grasp various holders 301 through 304 for holding devices such as the pipettes 207A and 207B, spatulas 203 and laboratory dish 201, and execute a variety of processes on the specimen using this plurality of devices.

Also, in this embodiment in particular, the two grasping members 112 of the hands 111 are configured such that they can grasp the test tube 205 from the long-direction opening side, and can grasp the test tube 205 from a direction orthogonal to the longitudinal direction. As a result, since the hands 111 can grasp the test tube 205 by two methods, from the long-direction opening side and from a direction orthogonal to the longitudinal direction, they can change the method of grasping in accordance with the shape or specifications of the stirrers 213A through 213C or centrifuges 212A and 212B in which the test tube 205 is provided, and the degree of freedom of operation of the test tube 205 can be improved.

Also, in this embodiment in particular, the two grasping members 112 of the hands 111 each have inside a first concavity 113 having a substantially arc-shaped cross-section. As a result, the hands 111 can reliably grasp the test tube 205 from a direction orthogonal to the longitudinal direction using the first concavity 113 having a substantially arc-shaped cross-section.

Also, in this embodiment in particular, a cover 205C that can open and close the opening 205P is provided on the test tube 205. Also, each grasping member 112 of the hands 111 has hooks 115 on the end that can open and close the cover 205C of the test tube 205. As a result, the hand 111 can smoothly open and close the cover 205C of the test tube 205 as necessary using the hook 115 of the grasping member 112, such as to open the cover 205C when injecting reagent into the test tube 205 and so forth, and to close the cover 205C when placing the test tube 205 in the stirrers 213A through 213C or centrifuges 212A and 212B and so forth.

Also, in this embodiment in particular, the plurality of devices include laboratory dishes 201, spatulas 203 and pipettes 207A and 207B. Thus, the two grasping members 112 of the hand 111 are configured so as to be able to grasp a plurality of holders 301 through 304 for holding the laboratory dishes 201, spatulas 203 and pipettes 207A and 207B and so forth. That is to say, the using the grasping members 112, the hand 111 can grasp various holders 301 through 304 for holding devices such as the laboratory dish 201 that contains the specimen, the spatula 203 for mixing the specimen, and the pipettes 207A and 207B, and therefore can execute a variety of processes on the specimen using this plurality of devices.

Also, in this embodiment in particular, the two grasping members 112 on the end of the hands 111 each have inside a second concavity 114 having a substantially rectangular cross-section. As a result, the hand 111 can reliably grasp a plurality of holders 301 through 304 for holding devices such as the laboratory dish 201, spatula 203 and pipettes 207A and 207B and so forth, using the second concavity 114 having a substantially rectangular cross-section. Furthermore, due to the second concavities 114 for grasping the holders 301 through 304 having a rectangular shape, the holders 301 through 304 that are holding a device can be prevented from being rotated with respect to the hand 111 by external forces.

Also, in this embodiment in particular, the plurality of devices include a pipette 207A having a main body 217, and a push-button 218 for performing suctioning and injection operations provided on the end on one side in the longitudinal direction of the main body 217. Thus, the robot 100 performs processes using the pipette 207A by grasping the main body 217 by the hand 111 of one arm 103, and operating the push-button 218 by the hand 111 of the other arm 103. By so doing, due to the fact that processes that use the pipette 207A are executed by the robot 100, processes can be executed with good precision, without non-uniformity of the suctioned amounts or injected amounts.

Also, in this embodiment in particular, at least some of the plurality of devices - in this example, the laboratory dish stand 202, spatulas 203, spatula stand 204, test tubes 205, test tube stands 206A and 206B, pipettes 207A and 207B, pipette stand 208, tips 209, tip stand 210, centrifuge 212B and stirrer 213B and so forth - are arranged on the table T. Additionally, a disposal box 250 is provided below the table T. By placing the disposal box 250 below the table T on which the devices are arranged, it is possible to dispose of consumable products such as the tips 209 attached to the end of the pipette 207A immediately after use. Also, by placing the disposal box 250 below the table T, there is also the effect that things will be prevented from scattering into the area around the discarded matter, because the disposal box 250 is covered by the table T.

Note that the present invention is not limited to the above-described embodiment, and various modifications may be made without deviating from the spirit and scope of the invention. The following describes such exemplary modifications one by one.

### (1) Case in which some devices are arranged linearly

That is to say, the test tube stand 206A, pipette stand 208 and work area WT may be arranged substantially linearly on one side of the base 101 of the robot 100.

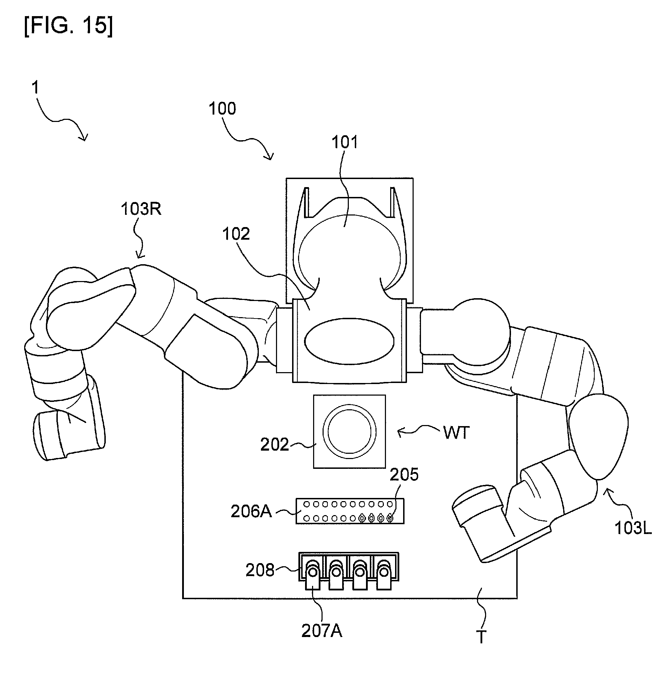

FIG. 15 is a top view of the constituent elements of the specimen processing system 1 of this exemplary modification. Note that FIG. 15 corresponds to FIG. 2 described above.

In FIG. 15, the specimen processing system 1 of this exemplary modification has the above-described robot 100, and the above-described plurality of devices which are arranged within the range of movement of the arms 103L and 103R of the robot 100. Note that in FIG. 15, among the plurality of devices, only the laboratory dish stand 202, test tubes 205, test tube stand 206A, pipette 207A and pipette stand 208 are illustrated, and illustrations of the devices other than these are omitted, and illustrations of the first through fourth holders 301 through 304 and the adsorption pad 260 are also omitted.

Here, in this exemplary modification, a table T is provided on one side (bottom side in FIG. 15) of the base 101 of the robot 100. The test tube stand 206A on which the test tube 205 is provided, the pipette stand 208 on which the pipette 207A is provided, and the work area WT in which the laboratory dish stand 202 is provided are arranged on the table T so as to result in a substantially straight line at the substantially central position in the left-right direction of the table T as seen from the base 101 (left-right direction in FIG. 15). The devices other than these are arranged at appropriate positions (for example, on the table T or around the table T) within the range of movement of the arms 103L and 103R of the robot 100. Also, although not illustrated, the above-described disposal box 250 is provided below the table T.

In this exemplary modification in which the devices are arranged as described above, similar to the embodiment described above, the robot 100 executes a process made up of predetermined steps on the specimen while using the devices by swinging the arms 103L and 103R and using the hands 111L and 111R.

According to this exemplary modification, similar to the embodiment described above, automation of the process steps on a specimen can be realized while making use of the general-purpose devices that have been used by operators. Also, the following effects may also be obtained in this exemplary modification. That is to say, when performing a process made up of predetermined steps on a specimen, a test tube 205 and a pipette 207A are mandatory, and their frequency of use by the arms 103L and 103R is high. Accordingly, in this exemplary modification, the test tube stand 206A in which the test tube 205 is provided, the pipette stand 208 in which the pipette 207A is provided, and the work area WT in which the laboratory dish stand 202 is provided are arranged substantially linearly on one side of the base 101. As a result, the round-trip distance made by the arms 103L and 103R between the placement positions of the test tube 205 and pipette 207A and the work area WT can be reduced. As a result, processing of the specimen can be performed rapidly.

### (2) Case in which some devices are arranged separately on the left and right

That is to say, the test tube stand 206A and pipette stand 208 may be arranged on one side and the other in the left and right directions of the work area WT as seen from the base 101 of the robot 100.

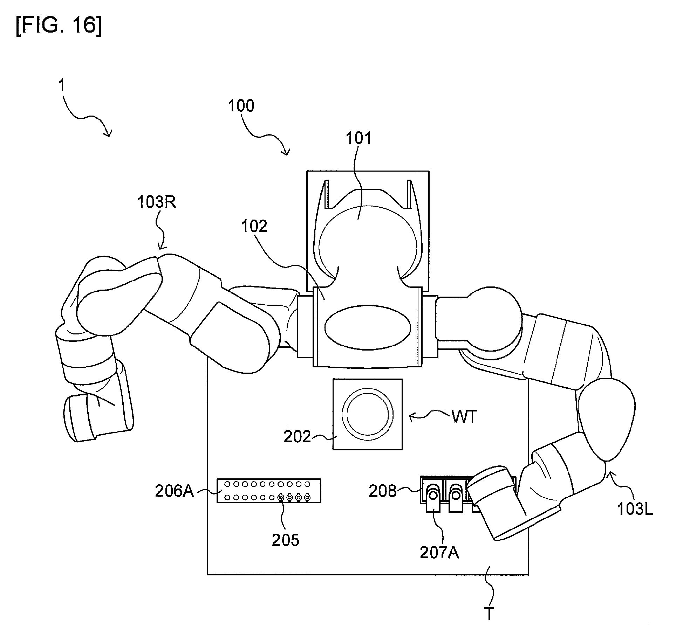

FIG. 16 is a top view of the constituent elements of the specimen processing system 1 of this exemplary modification. Note that FIG. 16 corresponds to FIG. 2 and FIG. 15 described above.

In FIG. 16, the specimen processing system 1 of this exemplary modification has the above-described robot 100, and the above-described plurality of devices which are arranged within the range of movement of the arms 103L and 103R of the robot 100. Note that in FIG. 16, among the plurality of devices, only the laboratory dish stand 202, test tubes 205, test tube stand 206A, pipette 207A and pipette stand 208 are illustrated, and illustrations of the devices other than these are omitted, and illustrations of the first through fourth holders 301 through 304 and the adsorption pad 260 are also omitted.

Here, in this exemplary modification, a table T is provided on one side (bottom side in FIG. 16) of the base 101 of the robot 100. Also, the above-described work area WT in which the laboratory dish stand 202 is provided is arranged on the table T at the substantially central position in the left-right direction of the table T as seen from the base 101 in this example (left-right direction in FIG. 16). Additionally, the test tube stand 206A in which the test tube 205 is provided and the pipette stand 208 in which the pipette 207A is provided are arranged on the table T divided into one side (left side in FIG. 16) and the other (right side in FIG. 16) in the left and right directions of the work area WT as seen from the base 101. The devices other than these are arranged at appropriate positions (for example, on the table T or around the table T) within the range of movement of the arms 103L and 103R of the robot 100. Also, although not illustrated, the above-described disposal box 250 is provided below the table T.

In this exemplary modification in which the devices are arranged as described above, similar to the embodiment described above, the robot 100 executes a process made up of predetermined steps on the specimen while using the devices by swinging the arms 103L and 103R and using the hands 111L and 111R.

According to this exemplary modification, similar to the embodiment described above, automation of the process steps on a specimen can be realized while making use of the general-purpose devices that have been used by operators. Also, in this exemplary modification, the work area WT in which the laboratory dish stand 202 is provided is arranged on one side of the base 101, and the test tube stand 206 in which the test tube 205 is provided and the pipette stand 208 in which the pipette 207A is provided are arranged divided into one side and the other in the left and right directions of the work area WT. As a result, the devices associated with a process that uses a test tube 205 (for example, the test tube stand 206B, etc.) can be arranged centralized on one side in the left-right direction of the work area WT, and the devices associated with a process that uses a pipette 207A (for example, the tip stand 210, etc.) can be arranged centralized on the other side in the left-right direction of the work area WT, and an arrangement that is distributed by function can be realized. On the other hand, since the work area WT is arranged in the center between the test tube stand 206A and the pipette stand 208, the round-trip distance made by the arms 103L and 103R between the placement position of the test tube 205 and the work area WT and between the placement position of the pipette 207A and the work area WT can each be reduced. As a result, processing of the specimen can be performed rapidly. Also, if the devices are arranged distributed according to function on one side and the other in the left and right directions of the work area WT, specimen processing can be performed efficiently because each arm 103 is operated in accordance with only the functions of one side or the other in the left and right directions.

### (3) Case in which devices are arranged radially on a circumference

That is to say, the plurality of devices may be arranged radially substantially on a circumference centered around the base 101 of the robot 100.

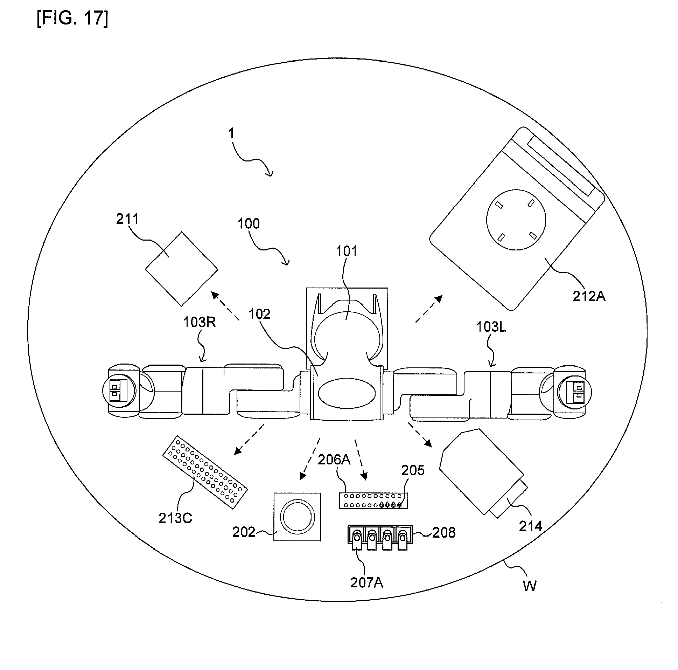

FIG. 17 is a top view of the constituent elements of the specimen processing system 1 of this exemplary modification. Note that FIG. 17 corresponds to FIG. 2, FIG. 15 and FIG. 16 described above.

In FIG. 17, the specimen processing system 1 of this exemplary modification has the above-described robot 100, and the above-described plurality of devices which are arranged within the range of movement of the arms 103L and 103R of the robot 100. Note that in FIG. 17, among the plurality of devices, only the laboratory dish stand 202, test tubes 205, test tube stand 206A, pipette 207A, pipette stand 208, incubator 211, centrifuge 212A, stirrer 213C and heating/cooling device 214 are illustrated, and illustrations of the devices other than these are omitted, and illustrations of the first through fourth holders 301 through 304, the adsorption pad 260 and the disposal box 250 are also omitted.

Here, in this exemplary modification, an enclosure wall W is provided surrounding the robot 100. That is to say, by providing an enclosure wall W surrounding the robot 100, safety is assured by the enclosure wall W not allowing people to enter the operating area of the robot. Thus, the plurality of devices are arranged so as to run along the wall surface of the enclosure wall W that is substantially on a circumference centered around the base 101 of the robot 100 - in other words, such that the access direction from the robot 100 (refer to dotted arrow) is in a substantially radial orientation facing the outside in the diametric direction substantially centered around the base 101.

In this exemplary modification in which the devices are arranged as described above, the robot 100 executes a process made up of predetermined steps on the specimen while using the devices by swinging the arms 103L and 103R while swinging the torso part 102 with respect to the base 101 and using the hands 111L and 111R.

According to this exemplary modification, similar to the embodiment described above, automation of the process steps on a specimen can be realized while making use of the general-purpose devices that have been used by operators. Also, in this exemplary modification, the plurality of devices are arranged substantially on a circumference centered around the base 101 of the robot 100. As a result, since the distance between the support positions of the arms 103L and 103R and the devices is nearly uniform, the arms 103L and 103R perform processing while performing operations by moving primarily the fingers in a circumferential direction, and the amount of movement of the fingers in the radial direction can be reduced. As a result, since the amount of movement of the joints of the arms 103L and 103R is small, processing of the specimen can be performed rapidly. Also, since the devices are arranged so as have a radial orientation, the front surfaces of the devices can face toward the robot 100, and the operability of the devices by the arms 103L and 103R can be improved.

Also, in this exemplary modification, the plurality of devices are arranged on the wall surface of the above-described enclosure wall. As a result, a table is unnecessary for arranging the devices, and installation space can be even further reduced. Also, due to the fact that the torso part 102 swings with respect to the base 101, the torso part 102 can enable the arms 103L and 103R to perform smooth access while always facing the front of the devices arranged radially substantially on a circumference centered around the base 101.

### (4) Case in which laboratory dish is rotated by one hand, and spatula operation is performed by other hand

That is to say, the process of mixing the specimen may be performed by providing a holder for holding the laboratory dish 201 such that it can rotate, rotating the laboratory dish 201 via the holder by the hand 111 of one arm 103, and operating the spatula 203 via the first holder 301 by the hand 111 of the other arm 103.

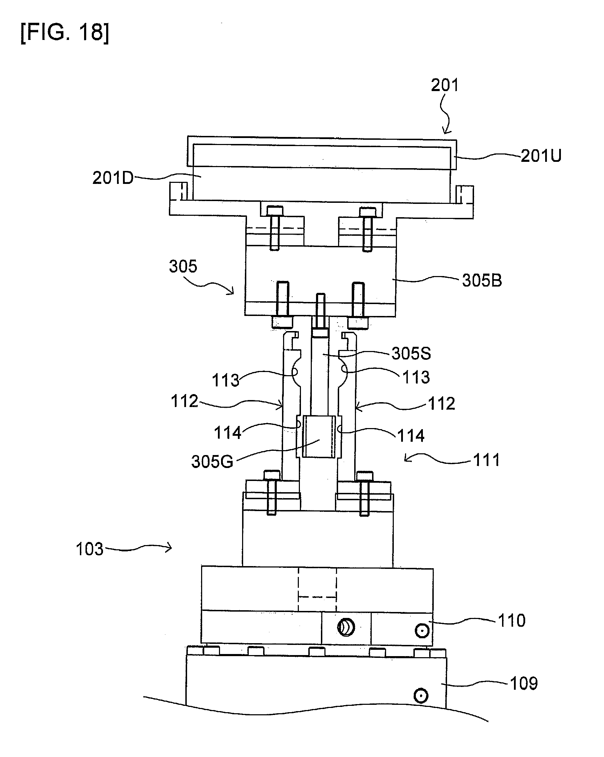

FIG. 18 is a side view illustrating, together with its surroundings, the holder for holding the laboratory dish 201 such that it can rotate.

As shown in FIG. 18, a fifth holder 305 for holding the laboratory dish 201 such that it can rotate has a holder body 305B that holds the laboratory dish 201, a grasped part 305G that fits into the second concavities 114 of the two grasping members 112 provided on the hand 111 of the arm 103 and can be grasped by the two grasping members 112, and a shaft 305S between the holder body 305B and the grasped part 305G.

That is to say, the robot 100 grasps the grasped part 305G using the second concavities 114 of the two grasping members 112 provided on the hand 111 of one of the arms 103. Then, it loads the laboratory dish 201 onto the holder body 305B via the third holder 303 by the hand 111 of the other arm 103. Subsequently, as described above, it lifts the cover 201U of the laboratory dish 201 loaded on the holder body 305B by the hand 111 of the other arm 103. Subsequently, by rotating the hand 111 of the one arm 103, it rotates the laboratory dish 201 via the fifth holder 305 by the one hand 111. Also, at this time, it grasps the grasped part 301G of the first holder 301 attached to the spatula 203 using the second concavities 114 of the two grasping members 112 provided on the hand 111 of the other arm 103. Subsequently, it mixes the specimen in the base dish 201D of the laboratory dish 201 loaded on the holder body 305B by operating the spatula 203 via the first holder 301 by the other hand 111.

In this exemplary modification described above, the robot 100 performs the process of mixing the specimen by rotating the laboratory dish 201 via the fifth holder 305 by the hand 111 of one arm 103, and operating the spatula 203 via the first holder 301 by the hand 111 of the other arm 103. By so doing, due to the fact that mixing processes that use the spatula 203 are executed by the robot 100, processes can be executed with good precision, without non-uniformity of the degree of mixing.

Note that in the above descriptions, examples in which the robot 100 is a two-armed robot equipped with two arms 103L and 103R were described, but it is not limited thereto, and a one-armed robot equipped with only one arm is also possible. In this case as well, similarly, automation of the process steps on a specimen can be realized while making use of the general-purpose devices that have been used by operators.

Also, in the above descriptions, examples in which the specimen processing system of the present invention is used in pre-processing of specimens for protein analysis were described, but they are not limited thereto, and the specimen processing system of the present invention may be used for any application provided that it executes a process made up of predetermined steps on a specimen.

Further, in addition to the examples described above, the techniques of the above-described embodiment and exemplary modifications may also be suitably combined.

Although other examples are not individually described herein, various changes and modifications can be made without departing from the spirit and scope of the present invention.

## Claims

1. A specimen processing system (1), comprising:
a robot (100) having a base (101) and arms (103L, 103R) having a plurality of joints;
a controller which operates the robot to execute a process of predetermined steps on the specimen; and
a plurality of devices (201, 202, 203, 204, 205, 206A, 206B, 207A, 207B, 208, 209, 210, 211, 212A, 212B, 213A-C, 214) arranged within a range of movement of the arms (103L, 103R) for performing the process on the specimen.

2. The specimen processing system (1) according to claim 1, wherein
the plurality of devices are arranged along a wall surface of an enclosure wall (W) provided surrounding the robot (100).

3. The specimen processing system (1) according to claim 2, wherein
the arms (103L, 103R) are provided such that they can swing on the base (101).

4. The specimen processing system (1) according to any one of claims 1 to 3, wherein
the robot (100) has two of the arms (103L, 103R) configured separately and a torso part (102) that supports the two arms (103L, 103R), wherein
the torso part (102) is provided such that it can swing on the base (101), and supports the two arms (103L, 103R) on one side and the other side.

5. The specimen processing system (1) according to any one of claims 1 to 4, wherein
the plurality of devices include a test tube (205), a test tube stand (206A, 206B), a pipette (207A, 207B), and a pipette stand (208) for performing the process on the specimen; and
the test tube stand (206A, 206B), the pipette stand (208) and a work area (WT) for the arms (103L, 103R) to perform the predetermined work on the specimen are arranged on one side of the base (101) so as to form a substantially straight line.

6. The specimen processing system (1) according to any one of claims 1 to 5, wherein
the robot (100) has two of the arms (103L, 103R) configured separately and a torso part (102) that supports the two arms (103L, 103R), the torso part (102) supporting the two arms (103L, 103R) on one side and the other side.

7. The specimen processing system (1) according to claim 6, wherein
the arms (103L, 103R) have hands (111L, 111R) on ends thereof, which has two grasping members (112) that can move in directions approaching and moving away from each other.

8. The specimen processing system (1) according to claim 7, wherein
the two grasping members (112) are configured such that they can grasp the test tube (205) from a side of an opening (205P) along a longitudinal direction and also can grasp the test tube (205) from a direction orthogonal to the longitudinal direction.

9. The specimen processing system (1) according to claim 8, wherein
each of the two grasping members (112) in its inner side has a first concavity (113) having a substantially arc-shaped cross-section.

10. The specimen processing system (1) according to claim 8 or 9, wherein
the test tube (205) has a cover (205C) that can open and close the opening (205P), and the grasping member (112) has a hook (115) on an end that can open and close the cover (205C).

11. The specimen processing system (1) according to any one of claims 7 to 10, wherein
the plurality of devices include a laboratory dish (201), a spatula (203) and a pipette (207A, 207B), and the two grasping members (112) are configured such that they can grasp a plurality of holders (301, 302, 303, 304, 305) for holding the laboratory dish (201), the spatula (203) and the pipette (207A, 207B).

12. The specimen processing system (1) according to claim 11, wherein
each of the two grasping members (112) in its inner side has a second concavity (114) having a substantially rectangular cross-section.

13. The specimen processing system (1) according to any one of claims 7 to 12, wherein
the plurality of devices include a pipette (207A, 207B) having a main body (217) and an operating part (218) provided on one end along the longitudinal direction of the main body (217) for performing suctioning and injection operations; and
the robot (100) performs a process that uses the pipette (207A, 207B) by grasping the main body (217) with the hand (111L, 111R) of one of the arms (103L, 103R) and operating the operating part (218) with the hand (111L, 111R) of the other of the arms (103L, 103R).

14. The specimen processing system (1) according to any one of claims 7 to 13, wherein
the plurality of devices include a laboratory dish (201) and a spatula (203); and
the robot (100) performs a process of mixing the specimen by rotating the laboratory dish (201) via a holder (305) with the hand (111L, 111R) of one of the arms (103L, 103R) and operates the spatula (203) via a holder (301) with the hand (111L, 111R) of the other of the arms (103L, 103R).

15. The specimen processing system (1) according to any one of claims 1 to 14, wherein
at least one of the plurality of devices (201, 202, 203, 204, 205, 206A, 206B, 207A, 207B, 208, 209, 210, 211, 212A, 212B, 213A-C, 214) is arranged on a table (T), and a disposal box (250) is provided below the table (T).
